# EUROPEAN PATENT APPLICATION

(11) **EP 1 903 197 A2**
(43) Date of publication of application: **26.03.2008**
(21) Application number: 07113199.9
(22) Date of filing: 26.07.2007
(51) Int. Cl.: F02B 37/013, F02B 41/10, F01N 3/20

(54) **Engine with energy recovery and catalytic exhaust gas treatment process**

(30) Priority: 27.07.2006 IT MI20061479
(71) Applicant: IVECO S.p.A., 10156 Torino (IT)
(72) Inventor: Dellora, Giancarlo, 10129, Torino (IT)
(74) Representative: Borsano, Corrado

(57) **Abstract**

An engine apparatus comprising an internal combustion engine (1) having an exhaust gas line (2) and at least a first (3) and a second (6) turbine for recovering energy from the exhaust gases arranged in series on said line, characterized in that a converter (8) comprising a catalyst for treating said gases is arranged on said exhaust line in an intermediate position between the two turbines.

Exhaust gas treatment process that can be incorporated in an engine as described above.

## Description

### Field of the invention

The present invention relates to an engine having at least two turbines arranged in series on the exhaust gas line to recover energy and a catalytic system to treat the exhaust gases.

### Prior art

In the field of internal combustion engines, in particular of diesel engines, it has become common practice to use turbines on the exhaust gas line to recover energy. Some kinds of engines have two turbines, arranged in series. They may be turbocompound engines in which one turbine, usually the upstream turbine, drives a turbocharger arranged on the intake line to supercharge the engine, while the second turbine provides mechanical power to the driving shaft, via various types of mechanical couplings. In other cases both turbines are used to turbocharge the intake air; for example the turbines may be part of separate turbocharger units. These engines are known as two-stage turbocharged engines.

Emissions of pollutants in exhaust gases are one of the main problems in this area of technology. Different kinds of treatment systems are used. These systems often involve the use of catalytic converters. For example some catalytic systems (such as SCR systems) reduce nitrogen oxide levels, others comprise oxidation catalysts. The latter, which often comprise metals such as platinum, promote the oxidation of unburnt substances coming from the engine and also facilitate the combustion of the particulate in the exhaust gases, also thanks to the rise in temperature due to the oxidation reaction. The heat that is generated can directly promote the combustion of the particulate or contribute to supplying heat to various types of particulate traps, in which the traps are regenerated as a result of particulate combustion. Moreover the heat that is generated can help to keep the temperature high in other catalytic systems (including SCR systems) installed downstream. Oxidation catalysts can also promote NO oxidation to NO₂, enhancing the efficiency of SCR catalysts.

In order to ensure an adequate level of efficiency, the most commonly used catalytic systems must be maintained at high temperatures. This means that the converters should preferably be arranged immediately downstream of the engine. In engines with turbines on the exhaust line this is not usually possible due to lack of space. In such cases the catalytic converters are usually placed downstream of the turbines, a solution that is not entirely satisfactory in terms of the efficiency of the catalysts.

### Summary

The problems described above have now been solved according to the present invention with an engine apparatus comprising an internal combustion engine having an exhaust gas line and at least a first and a second turbine for recovering energy from the exhaust gases arranged in series on said line, characterized in that a converter comprising a catalyst for treating said gases is arranged on said exhaust line in an intermediate position between the two turbines.

The invention also relates to a process for treating the exhaust gases from an internal combustion engine comprising the following operations:
recovery of energy from at least a portion of said exhaust gases in a first turbine;
catalytic treatment of at least a portion of the exhaust gases coming from said first turbine;
recovery of energy from at least a portion of said exhaust gases subjected to said catalytic treatment in a second turbine.

According to an embodiment of the invention, all the exhaust gases are subjected to all the operations. According to another embodiment a portion of the treated exhaust gas is withdrawn and re-introduced into the engine intake line.

According to a preferred embodiment the catalyst is an oxidation catalyst and the catalytic treatment is oxidation.

The invention relates in particular to that set forth in the appended claims.

### List of drawings

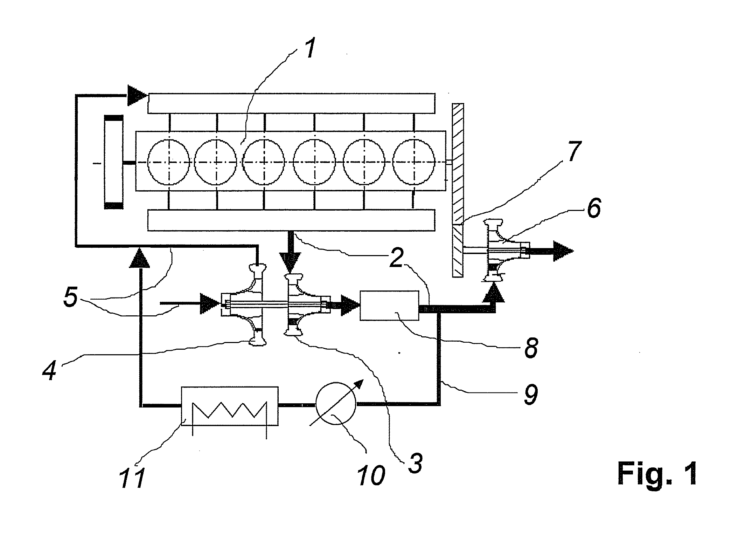

The present invention will now be illustrated through a detailed description of the preferred, but not exclusive embodiments, provided merely by way of example, with the aid of figure 1 attached hereto, which is the diagram of a turbocompound engine according to a preferred embodiment of the present invention.

### Detailed description of a preferred embodiment

With reference to figure 1, an engine apparatus is described, said engine apparatus comprising an internal combustion engine 1, for example a diesel engine, in particular an engine apparatus for an industrial vehicle, an exhaust gas line 2 for the exhaust gases coming from said engine. The first 3 and second 6 turbine suitable to recover the energy from the exhaust gases are arranged on the exhaust line. In the example illustrated here, of a turbocompound engine, the first turbine drives the turbocharger 4 arranged on the engine intake line 5, the second is suitable to supply power to the driving shaft via a mechanical coupling 7, which is of a type that is known. As mentioned previously, the present invention is not limited to this type of engine, but is valid for all engines in which there are two turbines arranged in series on the exhaust line. For example the second turbine can also be used to drive a turbocharger arranged on the intake line, as in the case of a two-stage turbocharged engine. Other arrangements may also be envisaged, in accordance with the prior art, for example using by-passes and waste-gates or additional expansion stages even in parallel, if considered appropriate. In the apparatus according to the present invention, a catalytic converter 8 is arranged on the exhaust gas line. The converter comprises a catalyst for treating the exhaust gases. It can be of a type that is known, of a size and structure according to the specific requirements and the pressure and temperature of the gases at the point in which it is installed.

According to a preferred embodiment of the invention the catalyst is an oxidation catalyst. According to another embodiment it is a catalyst suitable to reduce the levels of other pollutants, for instance a catalyst to reduce the level of nitrogen oxides, such as an SCR catalyst. Other types of catalyst may be envisaged (for example those based on the hydrolysis of reagents suitable to generate ammonia for an SCR catalyst). The use of several types of catalyst may be envisaged, possibly in several catalytic converters. Other exhaust gas treatment devices may be provided downstream of the second turbine, such as additional catalytic converters or particulate traps.

The arrangement described above has considerable advantages. The temperature of the gases in which the catalyst is placed is such as to guarantee efficiency even in case of catalysts that require higher temperatures. Moreover, the gases flowing through the second turbine are purified of pollutants that could undermine the correct operation and service life thereof, also in view of the fact that the second turbine operates at lower pressures and temperatures than the first and may be exposed to a greater risk of corrosion, in case of the formation of condensation. Moreover, if the reaction promoted by the catalyst is exothermic, as in the case of oxidation in particular, the heat can also be used in treatment systems downstream of the second turbine, or alternatively or also to increase the energy available for use in the second turbine, improving the overall performance of the system.

According to an embodiment of the invention, the exhaust gases from the engine are first expanded in the first turbine, after which they flow through the converter and are then expanded in the second turbine, with no intermediate withdrawal points.

According to another embodiment, as illustrated in figure 1, intermediate withdrawal points can be envisaged. If the exhaust gases are recirculated, by means of a recirculation circuit 9, the withdrawal point could be between the two turbines. In that case, according to an embodiment of the invention, the withdrawal point can be downstream of the converter 8. This would be advantageous because the removal of potentially corrosive pollutants, such as unburnt substances that would be oxidised by an oxidation catalyst, would have the beneficial effect of protecting other components on the recirculation circuits, such as the pump 10 and cooler 11 where present, or on the intake line, such as any coolers and the actual engine. The same applies if the withdrawal point is downstream of the second turbine. The advantage of having the withdrawal point upstream is that the pressure of the gases can be exploited to promote recirculation, reducing the power required by the pump 10 if, as illustrated, the recirculating gases are injected into the intake line downstream of the compressor 4, or providing an appropriate pressure difference if the recirculating gases are injected upstream of the compressor; in the latter case the pump 10 could be replaced with a control valve, and both the compressor and the valve would benefit from the reduction in the level of pollutants promoted by the catalytic converter.

Other arrangements for recirculation are possible, for example in the case of two compression stages, advantages could be drawn from having the withdrawal point downstream of the converter.

The invention also relates to a vehicle, in particular an industrial vehicle provided with the engine apparatus described above.

## Claims

1. Engine apparatus comprising an internal combustion engine (1) having an exhaust gas line (2) and at least a first (3) and a second (6) turbine for recovering energy from the exhaust gases, arranged in series on said line, **characterized in that** a converter (8) comprising a catalyst for treating said gases is arranged on said exhaust line in an intermediate position between the two turbines.

2. Apparatus according to claim 1, **characterized in that** said catalyst is an oxidation catalyst.

3. Apparatus according to any of the previous claims, **characterized in that** said engine is a diesel engine.

4. Apparatus according to any of the previous claims, **characterized in that** said engine is a turbocompound engine.

5. Apparatus according to any of the claims from 1 to 3, **characterized in that** said engine is a two-stage turbocharged engine.

6. Apparatus according to any of the previous claims, **characterized in that** it comprises an exhaust gas recirculation circuit (9) suitable to withdraw the gases from said exhaust line at a point downstream of said converter.

7. Method for treating the exhaust gases from an internal combustion engine comprising the following operations:
recovery of energy from at least a portion of said exhaust gases in a first turbine;
catalytic treatment of at least a portion of the exhaust gases coming from said first turbine;
recovery of energy from at least a portion of said exhaust gases subjected to said catalytic treatment in a second turbine.

8. Method according to claim 7, **characterized in that** said catalytic treatment is an oxidation treatment.

9. Vehicle, in particular an industrial vehicle comprising an engine apparatus according to any of the claims from 1 to 6.
